# EUROPÄISCHE PATENTSCHRIFT

(11) **EP 2 450 824 B1**
(45) Veröffentlichungstag und Bekanntmachung des Hinweises auf die Patenterteilung: **12.12.2012**
(21) Anmeldenummer: 11180495.1
(22) Anmeldetag: 08.09.2011
(51) Int. Cl.: G06K 7/10

(54) **Flackerfreie Beleuchtungsvorrichtung**
Flicker-free lighting device
Dispositif d'éclairage sans scintillement

(30) Priorität: 05.11.2010 DE 102010050577
(43) Veröffentlichungstag der Anmeldung: 09.05.2012
(73) Patentinhaber: SICK AG, 79183 Waldkirch (DE)
(72) Erfinder: Nübling, Ralf Ulrich, 79211 Denzlingen (DE); Gehring, Roland, 79215 Elzach (DE)
(74) Vertreter: Hehl, Ulrich

(56) Entgegenhaltungen:
- EP-A1- 2 048 596
- DE-A1- 10 349 553
- US-A1- 2010 165 160

## Beschreibung

Die Erfindung betrifft eine flackerfreie Beleuchtungsvorrichtung für einen Codeleser und ein entsprechendes Verfahren nach dem Oberbegriff von Anspruch 1 beziehungsweise 11.

Codeleser sind von Supermarktkassen, zur automatischen Paketidentifikation, Sortierung von Postsendungen, von der Gepäckabfertigung in Flughäfen und aus anderen Logistikanwendungen bekannt. Dabei werden mit der Weiterentwicklung der digitalen Kameratechnologie die weit verbreitet eingesetzten Barcodescanner zunehmend von kamerabasierten Codelesern abgelöst. Statt Codebereiche abzuscannen, nimmt ein kamerabasierter Codeleser mit Hilfe eines CCD-Chips Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die Code tragenden Objekte an dem Codeleser vorbei gefördert. Eine Zeilenkamera liest die Objektbilder mit den Codeinformationen sukzessive und zeilenweise mit der Relativbewegung ein. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Eine möglichst fehlerfreie Codelesung setzt eine ausreichende Beleuchtung des Codebereichs voraus. Dafür reicht das Umgebungslicht nur in seltenen Fällen aus, und im Falle von Lesetunneln wird das Umgebungslicht ohnehin abgeschirmt. Um das Lesefeld feld zusätzlich auszuleuchten, sind Codeleser mit einer sehr hellen, leistungsstarken Beleuchtung ausgestattet.

Bei der Erfassung von Codes auf bewegten Objekten wird die Beleuchtung gepulst betrieben, um Bewegungsunschärfen zu verhindern. Der Pulsbetrieb dient zugleich der Energieeinsparung und bietet thermische Vorteile. Wenn aber die Blitzfolge in einer Taktfrequenz erfolgt, die das menschliche Auge noch wahrnimmt, führt dies zu einem als unangenehm empfundenen Flackern für Personen im Umfeld des Codelesers, im äußersten Fall sogar zu epileptischen Anfällen. Mit steigenden Anforderungen an die Codeleser, die noch höhere Blitzenergien erfordern, wird diese störende oder gar gesundheitsgefährdende Wirkung auf die Bedienpersonen noch zunehmen.

Es besteht prinzipiell die Möglichkeit, dem sichtbaren Spektrum auszuweichen und beispielsweise eine Infrarotbeleuchtung zu verwenden. Damit wird zwar das Flackern nicht mehr wahrgenommen. Es gehen dabei aber wertvolle Bildinformationen verloren, die beispielsweise zur Erkennung von Objekten und Codebereichen genutzt werden.

Die US 7,234,641 B2 wählt den Ausweg, einen Codeleser mit einer hohen Pulsfrequenz jenseits der Wahrnehmbarkeitsschwelle des Menschen zu betreiben. Damit wird aber die Pulsfrequenz auf Werte festgelegt, die zumindest in vielen Anwendungen nicht der optimalen Bildwiederholung für die Codelesung entsprechen.

Aus der US 2008/0063410 A1 ist ein optisches Kommunikationssystem bekannt, bei dem während der optischen Informationsübertragung zusätzliche Lichtquellen in Pulspausen der Informationsübertragung aktiviert werden, so dass nach außen eine homogene Lichtverteilung wahrgenommen wird. Das erfordert aber eine relativ komplizierte Ermittlung der notwendigen Aktivierung der zusätzlichen Lichtquellen. Vor allem ist dieses Vorgehen für einen Codeleser unbrauchbar, weil damit der Erfassungsbereich homogen beleuchtet würde und damit die Vorteile einer gepulsten Beleuchtung verloren gehen.

Aus der DE 103 49 553 A1 ist ein Verfahren und eine Schaltungsanordnung zur Helligkeitsregelung von zumindest einer LED bekannt. Dabei wird die LED mit einem gepulsten Strom getrieben, und die Helligkeit kann durch Variation der Pulsstromamplitude, der Pulsstromdauer und /oder der Pulsstromfrequenz eingestellt werden. Insbesondere soll erreicht werden, dass durch eine geringe Pulsstromamplitude und gleichzeitig eine verringerte Pulsstromfrequenz eine möglichst geringe Grundhelligkeit eingestellt werden kann, so dass für das menschliche Auge der Übergang zwischen 0_% Helligkeit und einsetzender Helligkeit nicht sichtbar ist.

In der US 2010/0165160 A1 nutzt ein Codeleser variable Belichtungszeiten und eine gepulste Beleuchtung, deren Intensität an eine Bestimmung des Umgebungslichts angepasst wird.

Bei einem Codeleser gemäß EP 2 048 596 A1 wird die Aufnahmefrequenz an die Geschwindigkeit einer Relativbewegung zwischen Codeleser und den Code tragenden Objekten angepasst.

Es ist daher Aufgabe der Erfindung, eine gepulste Beleuchtung für einen Codeleser zu finden, die in der Nähe befindliche Personen nicht beeinträchtigt.

Diese Aufgabe wird durch eine flackerfreie Beleuchtungsvorrichtung gemäß Anspruch 1 sowie ein Verfahren zur flackerfreien Beleuchtung des Erfassungsbereichs eines Codelesers gemäß Anspruch 11 gelöst. Dabei geht die Lösung von dem Grundgedanken aus, die Unterschiede zwischen Lichtpulsen und Pulspausen zu verringern, und zwar gerade in einem Maße, in dem aus technischer Sicht die wesentlichen Vorteile einer stroboskopischen Beleuchtung erhalten bleiben, zugleich aber eine in der Nähe befindliche Person nicht mehr gestört wird. Dies wird erreicht, indem die Beleuchtungsintensität in den Pulspausen nicht bis auf Null gesenkt, die Beleuchtungsvorrichtung also nicht deaktiviert wird, sondern eine Grundhelligkeit verbleibt. Diese Grundhelligkeit wird hoch genug gewählt, dass der Unterschied zu den Lichtpulsen vom menschlichen Auge nicht oder jedenfalls kaum noch als störend empfunden wird. Dabei hilft die logarithmische Wahrnehmung des menschlichen Auges, welches einen absolut gesehen recht großen Intensitätsunterschied weniger stark wahrnimmt, als die Elektronik.

Die Erfindung hat den Vorteil, dass eine gepulste Beleuchtung auch mit solchen Pulsfrequenzen eingesetzt werden kann, die an sich vom menschlichen Betrachter als störend empfunden werden. Es wird somit möglich, die technischen Erfordernisse, nämlich kurze Lichtblitze zur Vermeidung von Bewegungsunschärfen, und die menschlichen Ansprüche an eine angenehme Arbeitsumgebung zu verbinden.

Die Beleuchtungsvorrichtung weist vorteilhafterweise eine Vielzahl von Beleuchtungseinheiten auf. Damit wird in einem gewünschten Beleuchtungsbereich die erforderliche Lichtstärke erreicht. Die Beleuchtungseinheiten sind bevorzugt Leuchtdioden, denn sie besitzen die erforderlichen hohen Ausgangsleistungen bei guter Ansteuerbarkeit zur reduzierten Lichtabgabe, Langlebigkeit und hoher Lichtausbeute. Als Beleuchtungseinheiten können aber auch die jeweiligen Beleuchtungen unterschiedlicher Codeleser eines Lesesystems aufgefasst werden, die ihrerseits möglicherweise jeweils eine Vielzahl von Leuchtdioden aufweisen. Derartige Lesesysteme, meist als Lesetunnel ausgebildet, ermöglichen in stationärer Montage die Erfassung von Objektoberflächen aus allen Richtungen. Durch kooperative Zeitabläufe des Pulsverhaltens der einzelnen Beleuchtungen der beteiligten Codeleser wird in den Pulspausen die Grundhelligkeit eingestellt. Damit ist zwar nicht mehr unbedingt sichergestellt, dass ein einzelner Codeleser flackerfrei bleibt, sehr wohl nehmen aber Personen von dem Lesesystem als Ganzes aus der Umgebung betrachtet allenfalls ein kaum noch merkliches Flackern wahr.

Anstatt sämtliche Beleuchtungseinheiten in den Pulspausen synchron auf einen gewissen, von Null verschiedenen Grundpegel zurückzuführen, ist auch denkbar, Gruppen innerhalb der Beleuchtungseinheiten zu bilden und das gewünschte Verhalten in der resultierenden Gesamtbeleuchtung durch deren unterschiedliche Ansteuerung zu erzielen. Dazu genügen gewöhnlich zwei Gruppen oder Teilmengen der Beleuchtungseinheiten, so dass also eine erste Teilmenge eine Auswahl aus den Beleuchtungseinheiten und eine zweite Teilmenge deren Komplement bildet.

Die Beleuchtungssteuerung ist dabei in einer ersten bevorzugten Alternative dafür ausgebildet, eine erste Teilmenge der Beleuchtungseinheiten mit einer Pulsfrequenz zu aktivieren und zu deaktivieren und eine zweite Teilmenge der Beleuchtungseinheiten im Dauerbetrieb zu halten. Das ist eine besonders einfache Umsetzung, zu der gewünschten Grundhelligkeit zu gelangen. Deren Pegel lässt sich durch die Mächtigkeit der ersten Teilmenge einstellen, also die Anzahl der Beleuchtungseinheiten im Dauerbetrieb.

In einer weiteren bevorzugten Alternative ist die Beleuchtungssteuerung dafür ausgebildet, eine erste Teilmenge der Beleuchtungseinheiten in den Pulspausen zu deaktivieren und eine zweite Teilmenge der Beleuchtungseinheiten in den Pulspausen auf eine von Null verschiedene Beleuchtungsintensität abzusenken. Die erste Teilmenge wird demnach so behandelt wie im Stand der Technik, und deren Beleuchtungseinheiten werden in einem üblichen An-Aus-Zyklus gepulst. Für die Grundhelligkeit sorgt die zweite Teilmenge, die in den Pulspausen auf einen von Null verschiedenen Grundpegel abgesenkt wird. Im Vergleich zu einer Lösung, bei der sämtliche Beleuchtungseinheiten in den Pulspausen eine Resthelligkeit abstrahlen, muss natürlich bei dieser Alternative ein höherer Grundpegel für die zweite Teilmenge eingestellt werden, wenn in der resultierenden Gesamtbeleuchtung dieselbe Grundhelligkeit erhalten bleiben soll.

In einer weiteren bevorzugten Alternative ist die Beleuchtungssteuerung dafür ausgebildet, eine erste Teilmenge der Beleuchtungseinheiten und eine zweite Teilmenge der Beleuchtungseinheiten in einer gegeneinander versetzten Sequenz zu aktivieren und zu deaktivieren. Durch die versetze Überlappung von aktiven und inaktiven Beleuchtungseinheiten entsteht in der resultierenden Gesamtbeleuchtung das gewünschte Muster aus Lichtpulsen hoher Ausgangsleistung und Pulspausen mit reduzierter, jedoch von Null verschiedener Grundhelligkeit.

Vorzugsweise ist die Beleuchtungssteuerung dafür ausgebildet, in den Pulspausen die Grundhelligkeit durch kurze Lichtpulse mit einer Pulsfrequenz höher der menschlichen Wahrnehmungsfrequenz zu erzeugen. Die Grundhelligkeit in den Pulspausen wird also nicht durch Dauerstrichbetrieb mit abgesenkter Intensität, sondern durch ihrerseits gepulste Beleuchtung erzielt. Diese kurzen Pulse dürfen nicht mit den eigentlichen Lichtpulsen verwechselt werden, da sie nur in den Pulspausen verwendet werden und nicht der Beleuchtung für den Codeleser dienen. Ein Vorteil liegt darin, dass die Amplitude konstant gehalten werden kann, somit der gleiche Strom und sogar die gleiche Ansteuerungsschaltung verwendet werden kann, um die Grundhelligkeit zu erzeugen.

Das Verhältnis der Beleuchtungsintensität während der Lichtpulse zu der Beleuchtungsintensität in den Pulspausen beträgt bevorzugt höchstens 10/1, insbesondere höchstens 4/1. Die Grundhelligkeit ist dann gering genug, um für die Elektronik die Vorteile einer Pulsbeleuchtung zu erhalten, und der Wechsel zwischen Grundhelligkeit und Lichtpuls wird zugleich wegen der logarithmischen Wahrnehmung des menschlichen Auges nicht als störend empfunden.

Eine Pulsfrequenz des Wechsels zwischen Lichtpulsen und Pulspausen liegt bevorzugt im Bereich von 1 Hz bis 100 Hz, insbesondere im Bereich von 15 Hz bis 85 Hz. Langsamere Pulsfrequenzen werden nicht mehr als Flackern, sondern als langsam wechselnde Einzelbilder wahrgenommen, kürzere Pulswechsel kann das menschliche Auge nicht mehr auflösen. Die Erfindung erschließt somit auch diese Frequenzbereiche ohne störendes Flackern. Dabei kann es auch sinnvoll sein, die Erfindung bei kleineren oder größeren Pulsfrequenzen anzuwenden, um individuelle Wahrnehmungsunterschiede oder unbewusste Empfindungen zu berücksichtigen. Die Beleuchtungsvorrichtung sendet dabei bevorzugt Licht in einem sichtbaren Wellenlängenbereich aus, ansonsten wäre das Flackern ohnehin nicht wahrnehmbar.

In einer vorteilhaften Weiterbildung ist ein kamerabasierter Codeleser, insbesondere ein stationärer Codeleser für bewegte Objekte, vorgesehen, der mit einer erfindungsgemäßen Beleuchtungsvorrichtung ausgestattet ist. Der Codeleser weist zudem einen Bildsensor für die Aufnahme von Bildern von Objekten mit zu lesenden Codes sowie eine Auswertungseinheit für die Decodierung von Codedaten aus den Bildern auf. Solche Codeleser benötigen eine lichtstarke Ausleuchtung des Erfassungsbereichs, und scharfe Bilder ohne Beeinträchtigung durch Bewegungen während der Belichtungszeit erleichtern die Decodierung.

Der Codeleser ist besonders bevorzugt als Zeilenkamera ausgebildet, die jeweils eine Bildzeile mit jedem Lichtpuls aufnimmt, wobei die Auswertungseinheit dafür ausgebildet ist, aufeinanderfolgende Bildzeilen zu dem Bild des Objekts zusammenzusetzen. Die Aufnahmefrequenz muss hier bei gewünschter Bildauflösung in Förderrichtung, also dem Abstand zweier aufeinanderfolgend aufgenommener Bildzeilen, an die Fördergeschwindigkeit angepasst werden. Daher sind häufig auch Pulsfrequenzen erforderlich, die ohne die erfindungsgemäße Beleuchtungsvorrichtung zu dem störenden Flackern führen würden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung der Montage eines Codelesers mit einer erfindungsgemäßen Beleuchtung über einem Förderband, auf dem Objekte mit zu lesenden Codes gefördert werden;
- Fig. 2a: ein zeitlicher Intensitätsverlauf bei einem ersten erfindungsgemäßen Pulsschema, bei dem sämtliche Beleuchtungseinheiten in Pulspausen nur bis auf einen von Null verschiedenen Grundpegel abgesenkt werden;
- Fig. 2b: der von einem menschlichen Betrachter wahrgenommene zeitlicher Intensitätsverlauf gemäß Figur 2a;
- Fig. 3a: ein zeitlicher Intensitätsverlauf ähnlich Figur 2a, bei dem die Grundhelligkeit durch kurze Lichtpulse mit einer Frequenz oberhalb der Wahrnehmungsschwelle erzeugt wird;
- Fig. 3b: der von einem menschlichen Betrachter wahrgenommene zeitliche Intensitätsverlauf gemäß Figur 3a;
- Fig. 4a: eine schematische Darstellung der Anordnung zweier Gruppen von Beleuchtungseinheiten in einer erfindungsgemäßen Beleuchtungsvorrichtung;
- Fig. 4b: eine Darstellung ähnlich Fig. 3a in einer Ausführung als zeilenförmige Beleuchtung;
- Fig. 5a: ein zeitlicher Intensitätsverlauf bei einem weiteren erfindungsgemäßen Pulsschema, bei dem lediglich ein Teil der Beleuchtungseinheiten in Puls- pausen nur bis auf einen von Null verschiedenen Grundpegel abgesenkt werden; Fig. 5b der von einem menschlichen Betrachter wahrgenommene zeitlicher Intensitätsverlauf gemäß Figur 4a;
- Fig. 6a: ein zeitlicher Intensitätsverlauf bei einem weiteren erfindungsgemäßen Pulsschema, bei dem ein Teil der Beleuchtungseinheiten im Dauerbetrieb bleibt;
- Fig. 6b: der von einem menschlichen Betrachter wahrgenommene zeitlicher Intensitätsverlauf gemäß Figur 5a;
- Fig. 7a: ein zeitlicher Intensitätsverlauf einer ersten Gruppe von Beleuchtungseinheiten in einem weiteren erfindungsgemäßen Pulsschema;
- Fig. 7b: ein zeitlicher Intensitätsverlauf einer zweiten Gruppe von Beleuchtungseinheiten in dem Pulsschema gemäß Figur 6a;
- Fig. 7c: ein zeitlicher Intensitätsverlauf der Überlagerung der beiden Gruppen aus Figur 6a und 6b;
- Fig. 7d: der von einem menschlichen Betrachter wahrgenommene zeitlicher Intensitätsverlauf gemäß Figur 6c;
- Fig. 8a: ein zeitlicher Intensitätsverlauf bei einem Pulsschema nach dem Stand der Technik, bei dem die Beleuchtungseinheiten in den Pulspausen deaktiviert werden; und
- Fig. 8b: der von einem menschlichen Betrachter wahrgenommene zeitlicher Intensitätsverlauf nach dem Stand der Technik gemäß Figur 7a.

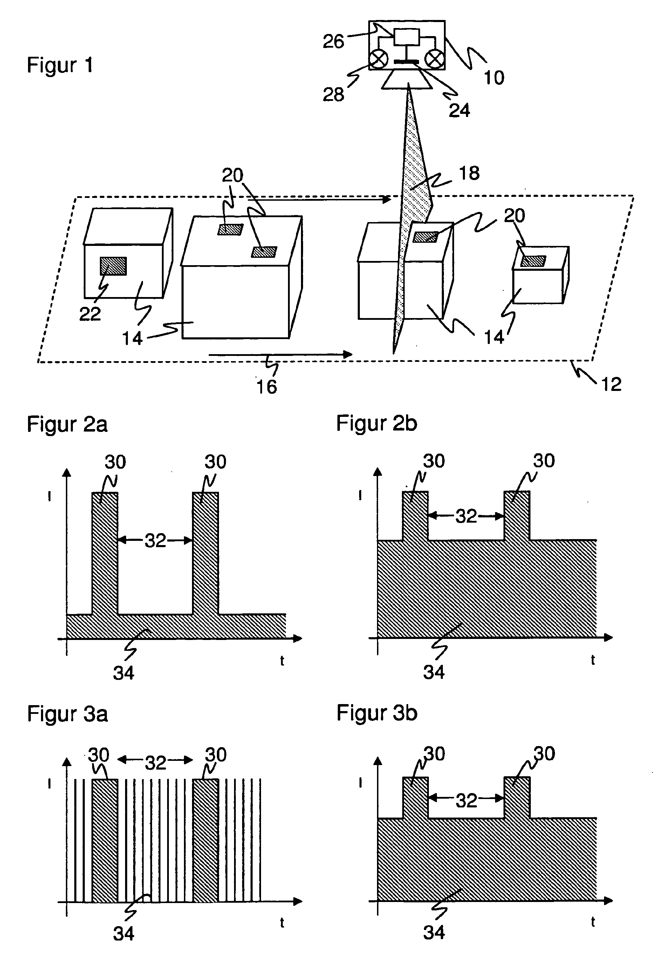

Figur 1 zeigt einen Codeleser 10, der über einem Förderband 12 montiert ist, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel.

Der Erfassungsbereich 18 des Codelesers 10 ist in Figur 1 als eine einzige Ebene dargestellt, die einem zeilenförmigen Bildsensor 24 des Codelesers 10 entspricht, beispielsweise einem CCD- oder CMOS-Chip mit einer matrixförmigen oder einer zeilenförmigen Anordnung von lichtempfindlichen Pixelelementen. Indem die Objekte 14 in der Förderrichtung 16 zeilenweise aufgenommen werden, entsteht nach und nach ein Gesamtbild der vorbeigeförderten Objekte 20.

Alternativ zu dieser zeilenweisen Abtastung können aber auch andere Abschnitte aufgenommen werden. So ist zum Beispiel denkbar, größere Bereiche aus mehreren Zeilen gleichzeitig aufzunehmen oder, den Zusatzaufwand beim Zusammenfügen eines Gesamtbilds in Kauf nehmend, auch eine beliebige andere Geometrie der jeweils einzelnen aufgenommenen Abschnitte. Das Zusammenfügen zu einem Gesamtbild ist bei einer gleichmäßigen Förderung der Objekte 14 in stationärem Aufbau relativ einfach zu lösen, besonders wenn die Fördereinrichtung 16 Weg- oder Geschwindigkeitsmessdaten liefert. Dennoch ist denkbar, den Sensor 10 auch als mobiles Gerät, beispielsweise Handgerät, einzusetzen und jeweils an dem zu lesenden Bereich vorbeizuführen.

Aufgabe des Codelesers 10 ist, die Codebereiche 20 zu erkennen und die dort angebrachten Codes auszulesen, zu dekodieren und dem jeweils zugehörigen Objekt 14 zuzuordnen. Dazu ist eine Auswertungseinheit 26 vorgesehen, welche die Signale des Bildsensors 24 erhält und mittels Bildverarbeitung den Code ausliest.

Der Codeleser 10 weist eine Beleuchtung 28 auf, die das Lesefeld im Erfassungsbereich 18 ausleuchtet. Die Beleuchtung 28 kann eine einzige Lichtquelle haben, umfasst aber in der Regel eine Vielzahl von einzelnen Lichtquellen und wird gepulst in einer Weise betrieben, die im Anschluss unter Bezugnahme auf die Figuren 2 bis 7 näher erläutert wird. Die Aktivität und die Intensitäten der Beleuchtung 28 steuert eine Beleuchtungssteuerung, die in Figur 1 als in die Auswertungseinheit 26 integriert dargestellt ist, davon abweichend aber auch ein eigener Baustein sein kann.

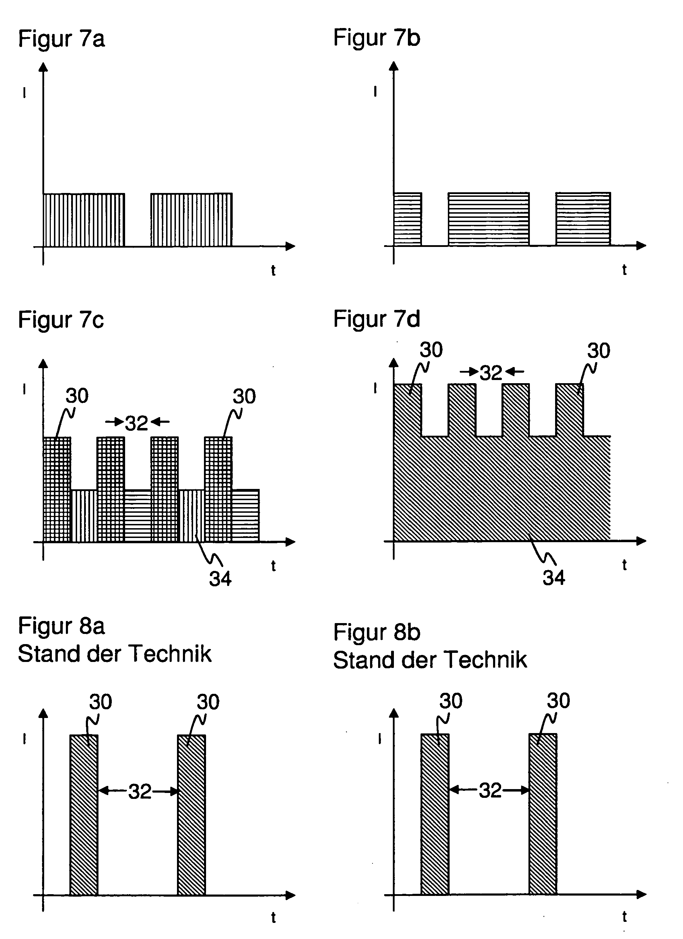

Figur 8a zeigt ein Pulsschema bei herkömmlichem Pulsbetrieb als zeitlichen Intensitätsverlauf. Während der Lichtpulse 30 selbst wird die Beleuchtung mit hoher oder sogar maximaler Ausgangsleistung betrieben. In den Pulspausen 32 zwischen jeweils zwei Lichtpulsen 30 dagegen wird die Beleuchtung deaktiviert. Der Intensitätsunterschied wird, wie Figur 8b zeigt, in genau dieser Weise vom menschlichen Auge auch wahrgenommen und führt zu störendem Flackern.

Deshalb ist erfindungsgemäß vorgesehen, die Beleuchtung 28 zwar mit einer hohen Pulsleistung während der Lichtpulse 30 zu betreiben, dann aber in der Pulspause 32 nicht auf Null abzusenken, sondern eine Grundhelligkeit beizubehalten. In Verbindung mit dem logarithmischen Helligkeitsempfinden des menschlichen Auges kann damit das Flackern weitgehend unterdrückt beziehungsweise über eine Optimierung von Puls-/Pausenhelligkeit auf annehmbare Eigenschaften eingestellt werden.

Figur 2a zeigt eine erste Ausführungsform eines erfindungsgemäßen Pulsschemas, wobei Pulsschemata wie in Figur 8 jeweils als zeitlicher Intensitäts- oder Helligkeitsverlauf dargestellt sind. In den Pulspausen 32 bleibt die Beleuchtung 28 mit einer Grundhelligkeit 34 aktiviert. Das entspricht quasi einer optischen Vorspannung oder einem positiven Versatz der Beleuchtungsintensität.

Figur 2b zeigt die Auswirkung auf die menschliche Wahrnehmung. Wegen der logarithmischen Helligkeitsempfindlichkeit des Auges wird die Grundhelligkeit 34 im Vergleich zu den Lichtpulsen 34 stärker wahrgenommen, so dass sich der wirksame Helligkeitsabstand zwischen Lichtpuls 30 und Grundhelligkeit 34 in den Pulspausen 32 deutlich verringert. Damit wirkt der Lichtpuls 30 für den Bildsensor 24 weiterhin ähnlich wie bei einem Pulsschema nach dem Stand der Technik gemäß Figur 8, für den menschlichen Betrachter aber nicht mehr oder zumindest wesentlich weniger störend. Dieser Effekt lässt sich durch eine geeignete Wahl der Grundhelligkeit 34 noch optimieren.

Der Wechsel zwischen Lichtpuls 30 und Grundhelligkeit 34 lässt sich nicht nur wie in Figur 2 dadurch realisieren, dass in den Pulspausen 32 die Lichtquelle oder alle Lichtquellen synchron und gemeinsam auf eine einheitliche Grundhelligkeit 34 abgesenkt werden. Es genügt, wenn im Mittel die Grundhelligkeit 34 resultiert.

Dazu kann anstelle eines Dauerstrichbetriebs mit abgesenkter Intensität, wie dies anhand der Figur 2a erläutert wurde, auch in den Pulspausen eine gepulste Beleuchtung verwendet werden. Dies ist in Figur 3a illustriert. Zwischen den eigentlichen Lichtpulsen 30 werden zur Erzeugung der Grundhelligkeit 34 kurze Pulse mit einer Pulsfrequenz erzeugt, die höher liegt, als die menschliche Wahrnehmungsschwelle. Deshalb werden diese kurzen Pulse auch nicht als solche empfunden, sondern verschmelzen für den Betrachter zu einer einheitlichen Beleuchtung. Dies ist in Figur 3b dargestellt.

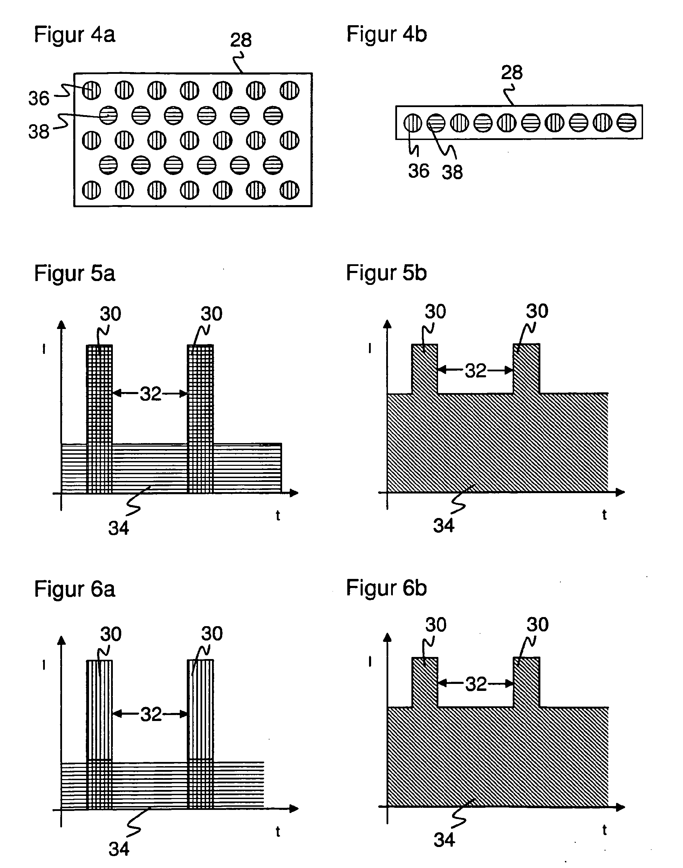

Für den Wechsel zwischen Lichtpuls 30 und Grundhelligkeit 34 können auch ganz gezielt einzelne Lichtquellen unterschiedlich betrieben werden. Figur 4a zeigt beispielhaft eine Ausführungsform einer Beleuchtung 28 mit einer Vielzahl von Beleuchtungseinheiten 36 einer ersten Gruppe und einer Vielzahl von Beleuchtungseinheiten 38 einer zweiten Gruppe. Die Beleuchtungseinheiten 36, 38 sind beispielsweise einzelne oder mehrere LEDs. Alternativ kann jede Beleuchtungseinheit 36, 38 aber auch als die jeweilige Beleuchtung 28 von mehreren Codelesern 10 aufgefasst werden, die in einem Lesesystem zur Omnilesung zusammengefasst sind.

Von ihrem inneren Aufbau her unterscheiden sich die Beleuchtungseinheiten 36, 38 beider Gruppen nicht, obwohl auch das möglich ist. Außerdem können auch zusätzliche Gruppen gebildet werden, wobei dies für die erfindungsgemäßen Pulsschemata nicht erforderlich ist und deshalb zumeist die Beleuchtungssteuerung nur unnötig verkompliziert. Die geometrische Anordnung der Beleuchtungseinheiten 36, 38 innerhalb der Beleuchtung 28 und untereinander ist rein beispielhaft zu verstehen. Gefordert ist letztlich nur, dass sich die ausgeleuchteten Bereiche der Beleuchtungseinheiten 36, 38 in ausreichendem Maße vermischen. Aus der Vielzahl denkbarer alternativer Anordnungen zeigt Figur 4b eine weitere Ausführungsform der Beleuchtung 28 als zeilenförmige Beleuchtung.

Figur 5a zeigt ein alternatives erfindungsgemäßes Pulsschema. Dabei entspricht die Schraffur des Intensitätsverlaufs derjenigen der aktivierten Gruppen von Beleuchtungseinheiten 36, 38 aus Figur 4. Sind beide Gruppen gleichzeitig aktiv, so entsteht aus der horizontalen Schraffur für die erste Gruppe und der vertikalen Schraffur für die zweite Schraffur ein Kästchenmuster.

Statt wie in Figur 2a die gesamte Beleuchtung 28 beziehungsweise alle Beleuchtungseinheiten 36, 38 in den Pulspausen 32 auf die Grundhelligkeit 34 abzusenken, wird in der Ausführungsform gemäß Figur 5a die erste Gruppe von Beleuchtungseinheiten 36 in den Pulspausen 32 vollständig deaktiviert, so dass die Grundhelligkeit 34 allein von der zweiten Gruppe von Beleuchtungseinheiten 38 aufrecht erhalten wird. Figur 5b zeigt die entsprechende Wahrnehmung des menschlichen Auges analog der Figur 2b. Es wird wenig oder kein störendes Flackern empfunden.

Ein weiteres alternatives erfindungsgemäßes Pulsschema zeigt Figur 6a. Hier beteiligt sich die zweite Gruppe von Beleuchtungseinheiten 38 gar nicht an den Lichtpulsen 30, sondern sorgt im Dauerbetrieb für die Grundhelligkeit 34. Dieser überlagern sich die Lichtpulse 30 der ersten Gruppe von Beleuchtungseinheiten 36. Dabei können die Beleuchtungseinheiten 36 der ersten Gruppe wahlweise in den Pulspausen 32 vollständig deaktiviert oder auf die Grundhelligkeit 34 abgesenkt werden. Figur 6b zeigt wiederum die zugehörige Wahrnehmung des menschlichen Auges, die sich bei geeigneter Wahl der Grundhelligkeit 34 nicht von Figur 5b unterscheidet.

Ein nochmals alternatives erfindungsgemäßes Pulsschema erläutert die Figur 7. Dabei werden die beiden Gruppen von Beleuchtungseinheiten 36, 38 in zueinander versetzten Aktivitätszyklen betrieben, die in der Überlagerung zu dem gewünschten Pulsverhalten mit Absenken auf eine Grundhelligkeit 34 in den Pulspausen 32 führen. Figur 7a zeigt den Aktivitätszyklus der ersten Gruppe von Beleuchtungseinheiten 36, Figur 7b denjenigen der zweiten Gruppe von Beleuchtungseinheiten 38. In diesem Beispiel ist ein regelmäßiger Zyklus von drei Zeiteinheiten Aktivität und einer Zeiteinheit Inaktivität gezeigt. Die Erfindung umfasst ebenso ein abweichendes Zeitverhalten und kompliziertere Zyklen.

Figur 7c zeigt die Überlagerung der Aktivitätszyklen gemäß der Figuren 7a und 7b. Es entsteht ein gleichmäßiger Wechsel von Lichtpulsen 30 maximaler Aktivität und Pulspausen 32, in denen die alternierend von einer der beiden Gruppen von Beleuchtungseinheiten 36, 38 gelieferte Grundhelligkeit 34 aufrecht erhalten bleibt. Figur 7d zeigt analog der Figur 2b, 3b, 5b oder 6b die logarithmisch mit der Helligkeit skalierende menschliche Empfindung, aufgrund derer der Abstand zwischen Lichtpuls 30 und Grundhelligkeit 34 als deutlich geringer und damit weitgehend flackerfrei wahrgenommen wird.

Obwohl die verschiedenen Pulsschemata jeweils einzeln anhand der Figuren 2 bis 7 erläutert sind, umfasst die Erfindung auch Mischformen. Prinzipiell ist es anhand der so beschriebenen Umsetzungen möglich, auch andere Aktivitätszyklen bis hin zu einem Aktivitätszyklus für jede einzelne Beleuchtungseinheit 36, 38 vorzugeben, um in der Überlagerung Lichtpulse 32 und eine genügend hohe Grundhelligkeit 34 in den Pulspausen 32 zu erhalten. Die Grundhelligkeit kann jeweils durch Absenken der Intensität selbst, also beispielsweise des Stromes, aber auch durch kurze Lichtpulse erreicht werden, wie dies zu Figur 3 erläutert wurde und auf die übrigen Ausführungsformen übertragbar ist.

Ebenso ist die Darstellung der Lichtpulse 32 als Rechteckpulse rein beispielhaft zu verstehen, auch andere Pulsformen erzielen den gewünschten flackerfreien Beleuchtungseffekt. Die Amplituden der Lichtpulse 30 und der Grundhelligkeit 34 werden angepasst, um einen Ausgleich zwischen einem genügend großen Hell-Dunkel-Abstand für die Elektronik einerseits und einem möglichst geringen Hell-Dunkel-Abstand für eine weitgehend flackerfreie Wahrnehmung zu finden.

## Patentansprüche

1. Flackerfreie Beleuchtungsvorrichtung (28) für einen Codeleser (10) mit einer Beleuchtungssteuerung (26), die dafür ausgebildet ist, die Beleuchtungsintensität in einem Pulsbetrieb zwischen Lichtpulsen (30) und Pulspausen (32) zu variieren,
**dadurch gekennzeichnet,**
**dass** die Beleuchtungssteuerung (26) weiterhin dafür ausgebildet ist, in den Pulspausen (32) eine von Null verschiedene Beleuchtungsintensität zu erhalten, so dass eine Grundhelligkeit (34) verbleibt, bei der eine stroboskopische Beleuchtung erhalten bleibt, die Grundhelligkeit (34) aber hoch genug gewählt ist, dass der Unterschied zu den Lichtpulsen (30) vom menschlichen Auge nicht wahrgenommen wird.

2. Beleuchtungsvorrichtung (28) nach Anspruch 1,
die eine Vielzahl von Beleuchtungseinheiten (36, 38) aufweist, wobei die Beleuchtungseinheiten (36, 38) Leuchtdioden oder die jeweiligen Beleuchtungen (26) unterschiedlicher Codeleser (10) eines Lesesystems sind.

3. Beleuchtungsvorrichtung (28) nach Anspruch 2,
wobei die Beleuchtungssteuerung (26) dafür ausgebildet ist, eine erste Teilmenge der Beleuchtungseinheiten (36) mit einer Pulsfrequenz zu aktivieren und zu deaktivieren und eine zweite Teilmenge der Beleuchtungseinheiten (38) im Dauerbetrieb zu halten.

4. Beleuchtungsvorrichtung (28) nach Anspruch 2,
wobei die Beleuchtungssteuerung (26) dafür ausgebildet ist, eine erste Teilmenge der Beleuchtungseinheiten (36) in den Pulspausen (32) zu deaktivieren und eine zweite Teilmenge der Beleuchtungseinheiten (38) in den Pulspausen (32) auf eine von Null verschiedene Beleuchtungsintensität (34) abzusenken.

5. Beleuchtungsvorrichtung (28) nach Anspruch 2,
wobei die Beleuchtungssteuerung (26) dafür ausgebildet ist, eine erste Teilmenge der Beleuchtungseinheiten (36) und eine zweite Teilmenge der Beleuchtungseinheiten (38) in einer gegeneinander versetzten Sequenz zu aktivieren und zu deaktivieren.

6. Beleuchtungsvorrichtung (28) nach einem der vorherigen Ansprüche,
wobei die Beleuchtungssteuerung dafür ausgebildet ist, in den Pulspausen die Grundhelligkeit durch kurze Lichtpulse mit einer Pulsfrequenz höher der menschlichen Wahrnehmungsfrequenz zu erzeugen.

7. Beleuchtungsvorrichtung (28) nach einem der vorhergehenden Ansprüche,
wobei das Verhältnis der Beleuchtungsintensität während der Lichtpulse (30) zu der Beleuchtungsintensität in den Pulspausen (32) höchstens 10/1, insbesondere höchstens 4/1 beträgt.

8. Beleuchtungsvorrichtung (28) nach einem der vorhergehenden Ansprüche,
wobei eine Pulsfrequenz des Wechsels zwischen Lichtpulsen (30) und Pulspausen (32) im Bereich von 1 Hz bis 100 Hz, insbesondere im Bereich von 15 Hz bis 85 Hz liegt, und wobei die Beleuchtungsvorrichtung (28, 36, 38) Licht in einem sichtbaren Wellenlängenbereich aussendet.

9. Kamerabasierter Codeleser (10), insbesondere stationärer Codeleser für bewegte Objekte (14), mit einer Beleuchtungsvorrichtung (28) nach einem der vorhergehenden Ansprüche, wobei der Codeleser (10) einen Bildsensor (24) für die Aufnahme von Bildern von Objekten (14) mit zu lesenden Codes (20, 22) sowie eine Auswertungseinheit (26) für die Decodierung von Codedaten aus den Bildern aufweist.

10. Codeleser (10) nach Anspruch 9,
der als Zeilenkamera ausgebildet ist, die jeweils eine Bildzeile mit jedem Lichtpuls (30) aufnimmt, wobei die Auswertungseinheit (26) dafür ausgebildet ist, aufeinanderfolgende Bildzeilen zu dem Bild des Objekts (14, 20, 22) zusammenzusetzen.

11. Verfahren zu flackerfreien Beleuchtung des Erfassungsbereichs (18) eines Codelesers (10), wobei die Beleuchtungsintensität in einem Pulsbetrieb zwischen Lichtpulsen (30) und Pulspausen (32) variiert,
**dadurch gekennzeichnet,**
**dass** der Erfassungsbereich (18) in den Pulspausen (32) mit einer von Null verschiedenen Beleuchtungsintensität beleuchtet wird, so dass eine Grundhelligkeit (34) verbleibt, bei der eine stroboskopische Beleuchtung erhalten bleibt, die Grundhelligkeit (34) aber hoch genug gewählt ist, dass der Unterschied zu den Lichtpulsen (30) vom menschlichen Auge nicht wahrgenommen wird.

## Claims

1. A flicker-free illumination apparatus (28) for a code reader (10) having an illumination control (26) which is configured for a pulsed operation with an illumination intensity varying between light pulses (30) and pulse pauses (32), **characterized in that** the illumination control (26) is further configured to maintain a non-zero illumination intensity during the pulse pauses (32), such that a basic intensity (34) remains in which a stroboscopic illumination is maintained, but where the basic intensity (34) is selected high enough so that the difference to the light pulses (30) is not perceived by the human eye.

2. The illumination apparatus (28) according to claim 1, comprising a plurality of illumination units (36, 38), wherein the illumination units (36, 38) are light emitting diodes or respective illumination apparatuses of different code readers (10) of a reading system.

3. The illumination apparatus (28) according to claim 2, wherein the illumination control (26) is configured to activate and deactivate a first subset of the illumination units (36) with a pulse frequency and to maintain continuous operation of a second subset of the illumination units (38).

4. The illumination apparatus (28) according to claim 2, wherein the illumination control (26) is configured to deactivate a first subset of the illumination units (36) during the pulse pauses (32) and to reduce a second subset of the illumination units (38) to a non-zero illumination intensity (34) during the pulse pauses (32).

5. The illumination apparatus (28) according to claim 2, wherein the illumination control (26) is configured to activate and deactivate a first subset of the illumination units (36) and a second subset of the illumination units (38) in a staggered sequence.

6. The illumination apparatus (28) according to any of the preceding claims, wherein the illumination control (26) is configured to generate the basic intensity (34) by small light pulses at a pulse frequency higher than human perception.

7. The illumination apparatus (28) according to any of the preceding claims, wherein the ratio of illumination intensity during the light pulses (30) to illumination intensity during the pulse pauses (32) is at most 10/1, in particular at most 4/1.

8. The illumination apparatus (28) according to any of the preceding claims, wherein the pulse frequency of alternating light pulses (30) and pulse pauses (32) is in the range from 1 Hz to 100 Hz, in particular in the range of 15 Hz and 85 Hz, and wherein the illumination apparatus (28, 36, 38) transmits light in a visible spectrum.

9. A camera-based code reader (10), in particular a stationary code reader for moving objects (14), comprising an illumination apparatus (28) according to any of the preceding claims, wherein the code reader (10) comprises an image sensor (24) for taking images of objects (14) with codes (20, 22) to be read and an evaluation unit (26) for the decoding of code data from the images.

10. The code reader (10) of claim 9, the code reader (10) being designed as a line camera that takes a respective image line during a light pulse (30), wherein the evaluation unit (26) is configured to stitch successive image lines to an image of the object (14, 20, 22).

11. A method for flicker-free illumination of a reading area (18) of a code reader (10), wherein the illumination intensity varies in a pulsed operation between light pulses (30) and pulse pauses (32), **characterized in that** the reading area (18) is illuminated with a non-zero illumination intensity during the pulse pauses (32), such that a basic intensity (34) remains in which a stroboscopic illumination is maintained, but where the basic intensity (34) is selected high enough so that the difference to the light pulses (30) is not perceived by the human eye.

## Revendications

1. Appareil d'éclairage sans scintillement (28) pour un lecteur de code (10) avec une commande d'éclairage (26) qui est configurée pour varier l'intensité d'éclairage dans un fonctionnement d'impulsions entre des impulsions de lumière (30) et des pauses d'impulsions (32), **caractérisé en ce que** la commande d'éclairage (26) est en outre configurée pour obtenir une intensité d'éclairage non-zéro au cours des pauses d'impulsion (32), de telle sorte qu'une intensité de base (34) reste dans laquelle un éclairage stroboscopique est maintenu mais l'intensité de base (34) est choisie suffisamment élevée pour que la différence des impulsions de lumière (30) n'est pas perçue par l'oeil humain.

2. Appareil d'éclairage (28) selon la revendication 1, comprenant une pluralité d'unités d'éclairage (36, 38), dans lequel les unités d'éclairage (36, 38) sont des diodes électroluminescentes ou respectivement des appareils d'éclairage des différents lecteurs de codes (10) d'un système de lecture.

3. Appareil d'éclairage (28) selon la revendication 2, dans lequel la commande d'éclairage (26) est configurée pour activer et désactiver un premier sous-ensemble des unités d'éclairage (36) avec une fréquence d'impulsion et pour maintenir un fonctionnement continu d'un deuxième sous-ensemble des unités d'éclairage (38)..

4. Appareil d'éclairage (28) selon la revendication 2, dans lequel la commande d'éclairage (26) est configurée pour désactiver un premier sous-ensemble des unités d'éclairage (36) pendant l'impulsion de pause (32) et pour réduire un second sous-ensemble des unités d'éclairage (38) à une intensité d'éclairage non-zéro (34) pendant des pauses d'impulsion (32).

5. Appareil d'éclairage (28) selon la revendication 2, dans lequel la commande d'éclairage (26) est configurée pour activer et désactiver un premier sous-ensemble des unités d'éclairage (36) et un second sous-ensemble des unités d'éclairage (38) dans une séquence en quinconce.

6. Appareil d'éclairage (28) selon l'une des revendications précédentes, dans lequel la commande d'éclairage (26) est configurée pour générer l'intensité de base (34) par d'impulsions de lumière courtes à une fréquence d'impulsions supérieure à la perception humaine.

7. Appareil d'éclairage (28) selon l'une des revendications précédentes, dans lequel le rapport de l'intensité d'éclairage pendant les impulsions de lumière (30) à l'intensité d'éclairage lors des pauses d'impulsion (32) est au maximum 10/1, en particulier au maximum 4/1.

8. Appareil d'éclairage (28) selon l'une des revendications précédentes, dans lequel la fréquence des impulsions d'alternance entre des impulsions de lumière (30) et des pauses d'impulsion (32) est dans la domaine de 1 Hz à 100 Hz, en particulier de 15 Hz à 85 Hz, et dans lequel l'appareil d'éclairage (28, 36, 38) transmet la lumière dans un spectre visible.

9. Lecteur de code à base de caméra (10), en particulier un lecteur de code fixe pour des objets (14) mouvementés, comprenant un appareil d'éclairage (28) selon l'une des revendications précédentes, dans lequel le lecteur de code (10) comprend un capteur d'image (24) pour prendre des images des objets (14) avec des codes (20, 22) à lire et une unité d'évaluation (26) pour le décodage des données de code des images.

10. Lecteur de code (10) selon la revendication 9, qui est conçu comme une caméra linéaire qui prend une image d'une ligne avec chaque impulsion lumineuse (30), dans lequel l'unité d'évaluation (26) est configurée pour composer une image de l'objet (14, 20, 22) par des lignes de couture d'image successives.

11. Procédé pour l'éclairage sans scintillement de la zone de lecture (18) d'un lecteur de code (10) dans lequel l'intensité d'éclairage dans un fonctionnement d'impulsions varie entre les impulsions de lumière (30) et des pauses d'impulsions (32), **caractérisé en ce que** la zone de lecture (18) est illuminée avec une intensité d'éclairage non-zéro pendant la pause d'impulsion (32) de telle sorte qu'une intensité de base (34) reste dans laquelle un éclairage stroboscopique est maintenu, mais l'intensité de base (34) est choisie suffisamment élevée pour que la différence des impulsions de lumière (30) n'est pas perçue par l'oeil humain.
